# EUROPÄISCHE PATENTANMELDUNG

(11) **EP 2 716 511 A2**
(43) Veröffentlichungstag der Anmeldung: **09.04.2014**
(21) Anmeldenummer: 13187610.4
(22) Anmeldetag: 07.10.2013
(51) Int. Cl.: B60S 1/08

(54) **Regensensor, Kraftfahrzeug und Verfahren zum Erfassen der Intensität eines Niederschlags**

(30) Priorität: 06.10.2012 DE 102012019621
(71) Anmelder: Valeo Schalter und Sensoren GmbH, 74321 Bietigheim-Bissingen (DE)
(72) Erfinder: Briem, Rolf, 74177 Bad Friedrichshall (DE)

(57) **Zusammenfassung**

Die Erfindung betrifft einen Regensensor (3) zum Erfassen der Intensität eines Niederschlags auf einer lichtdurchlässigen Scheibe (2) eines Kraftfahrzeugs (1), mit zumindest zwei Sendeelementen (D1 bis D4) jeweils zum Aussenden elektromagnetischer Strahlen, mit zumindest einem Empfangselement (D5) zum Empfangen zumindest eines Teils der ausgesendeten Strahlen, und mit einer Steuer- und Auswerteeinrichtung zum Ansteuern der Sendeelemente (D1 bis D4) und zum Bestimmen der Intensität abhängig von den empfangenen Strahlen, wobei zumindest eines der zumindest zwei Sendeelemente (D1 bis D4) auch als Strahtungsempfänger ausgebildet ist und die Steuer- und Auswerteeinrichtung dazu ausgelegt ist, beim Aussenden der Strahlen durch ein weiteres Sendeelement (D1 bis D4) das zumindest eine Sendeelement (D1 bis D4) als Strahlungsempfänger zu betreiben.

## Beschreibung

Die Erfindung betrifft einen Regensensor zum Erfassen der Intensität eines Niederschlags auf einer lichtdurchlässigen Scheibe, insbesondere einer Windschutzscheibe, eines Kraftfahrzeugs, mit zumindest zwei Sendeelementen jeweils zum Aussenden elektromagnetischer Strahlen, mit zumindest einem Empfangselement zum Empfangen zumindest eines Teils der ausgesendeten Strahlen, und mit einer elektronischen Steuer- und Auswerteeinrichtung zum Ansteuern der Sendeelemente und zum Bestimmen der Intensität abhängig von den empfangenen Strahlen. Die Erfindung betrifft außerdem ein Kraftfahrzeug mit einem solchen Regensensor sowie ein entsprechendes Verfahren.

Regensensoren zur Erfassung der Intensität eines Niederschlags bzw. zur Detektion von Feuchtigkeitstropfen auf einer Scheibe eines Fahrzeugs sind bereits aus dem Stand der Technik in vielfältiger Ausgestaltung bekannt. Sie werden typischerweise in Kraftfahrzeugen eingesetzt, um eine automatische Steuerung der Scheibenwischer in Abhängigkeit von der erfassten Intensität des Niederschlags zu ermöglichen. Der Regensensor betrachtet dabei einen bestimmten Bereich der Windschutzscheibe und bestimmt die Intensität des Niederschlags in diesem Bereich.

Ein Regensensor der eingangs genannten Gattung ist beispielsweise im Dokument EP 1 187 743 B1 beschrieben. Der Regensensor weist eine Vielzahl von Sendeelementen auf, die elektromagnetische Strahlen in den betrachteten Bereich der Scheibe aussenden. Die Sendeelemente sind beispielsweise als Lumineszenzdioden bzw. LEDs ausgebildet. Die ausgesendeten Strahlen können im vom Menschen sichtbaren oder unsichtbaren Spektralbereich liegen. Beispielsweise werden Strahlen im ultravioletten Spektralbereich ausgesendet. Zumindest ein Teil der ausgesendeten Strahlen wird aus dem betrachteten Bereich auf eines oder mehrere Empfangselemente des Regensensors reflektiert. Die Empfangselemente erzeugen dann ein Signal, das abhängig von der Intensität der empfangenen optischen Strahlen ist. Diese Intensität der Strahlen ist wiederum abhängig von der Anzahl der Feuchtigkeitstropfen in dem vom Regensensor betrachteten Bereich der Scheibe. Als Feuchtigkeitstropfen können beispielsweise Regentropfen, Tautropfen, Nebeltropfen, angeschmolzene Schneeflocken oder angetaute Hagelkörner detektiert werden.

Wenn Feuchtigkeitstropfen auf der Scheibe angeordnet sind, ergibt sich im Bereich der Tropfen statt eines Übergangs Scheibe/Luft ein Übergang Scheibe/Tropfen, was zu einer veränderten Differenz zwischen den Brechungsindexen im Bereich der Tropfen führt. An dem Übergang Scheibe/Tropfen werden die Strahlen nicht mehr in Richtung der Empfangselemente total reflektiert, sondern in andere Richtungen total reflektiert oder treten sogar aus der Scheibe heraus in den Feuchtigkeitstropfen ein.

Um die Intensität des Niederschlags zuverlässig erfassen zu können, werden in der Regel eine Vielzahl von Sendeelementen benötigt, welche um ein Empfangselement herum ringförmig verteilt angeordnet sind. Eine solche Anordnung der Sendeelemente ist beispielsweise in Fig. 2 des Dokuments EP 1 187 743 B1 gezeigt. Der neueste Trend geht des Weiteren auch dahin, in den Regensensor auch zusätzliche Sensorelemente zu integrieren, um zusätzliche Anwendungen im Kraftfahrzeug bereitstellen zu können. Beispielsweise werden Regensensoren mit einem Wärmestrahlungsdetektor und/oder einem Sensorelement zur Erfassung der Intensität des Umgebungslichts und/oder einem Sensorelement zur Detektion eines Tunnels und dergleichen ausgebildet. Pro Anwendung ist dabei üblicherweise mindestens ein Sendeelement als auch ein Empfangselement erforderlich, welche eine gewisse Fläche des Regensensors benötigen und somit relativ viel Bauraum an der Windschutzscheibe in Anspruch nehmen. Um die Größe des Regensensors noch im Rahmen zu halten, ohne das optische Erscheinungsbild des Innenraums eines Kraftfahrzeugs zu sehr zu beeinträchtigten, sind neue Lösungen erforderlich.

Es ist Aufgabe der Erfindung, einen Regensensor, ein Kraftfahrzeug sowie ein Verfahren bereitzustellen, bei denen Maßnahmen getroffen sind, die gewährleisten, dass der Regensensor im Vergleich zum Stand der Technik mit einer reduzierten Anzahl von Sendeelementen auskommen kann.

Diese Aufgabe wird erfindungsgemäß durch einen Regensensor, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßer Regensensor ist zum Erfassen der Intensität bzw. Stärke eines Niederschlags auf einer lichtdurchlässigen Scheibe eines Kraftfahrzeugs ausgebildet. Der Regensensor umfasst zumindest zwei Sendeelemente jeweils zum Aussenden elektromagnetischer Strahlen, im sichtbaren oder unsichtbaren Spektralbereich. Der Regensensor umfasst auch zumindest ein Empfangselement zum Empfangen zumindest eines Teils der Strahlen, nämlich insbesondere desjenigen Teils, welcher an der Scheibe reflektiert wird und zum Empfangselement gelangt. Eine elektronische Steuer- und Auswerteeinrichtung steuert die Sendeelemente an und bestimmt die Intensität des Niederschlags abhängig von den empfangenen Strahlen. Zumindest eines der zumindest zwei Sendeelemente ist auch als Strahlungsempfänger ausgebildet, und die Steuer- und Auswerteeinrichtung ist dazu ausgelegt, beim Aussenden der Strahlen durch ein weiteres Sendeelement das zumindest eine Sendeelement als Strahlungsempfänger zu betreiben, welcher zumindest einen Teil der Strahlen empfängt.

Die Erfindung macht sich dabei die Tatsache zunutze, dass bei einem Regensensor üblicherweise gleiche bzw. identische Elemente sowohl als Sendeelemente als auch als Empfangselemente eingesetzt werden. Es werden nämlich üblicherweise Leuchtdioden sowohl als Sendeelemente als auch als Empfangselemente verwendet, wobei sie bei Verwendung als Empfangselement invertiert bzw. in Sperrrichtung betrieben werden. Die Erfindung geht nun den Weg, zumindest eines der Sendeelemente auch als Empfänger zu betreiben. Auf diese Art und Weise kann bei der gleichen Anzahl von Sendelementen eine größere Anzahl von Messstrecken und somit auch eine größere Anzahl von Messfeldern an der Scheibe bereitgestellt werden, an denen die Strahlen reflektiert werden sollen. Sind beispielsweise insgesamt zwei Sendeelemente und ein Empfangselement vorhanden, so können statt zwei Messstrecken insgesamt drei Messstrecken realisiert werden, wenn eines der Sendeelemente auch als Empfänger betrieben wird. Werden z.B. vier Sendeelemente eingesetzt, von denen mindestens zwei zusätzlich als Empfänger betrieben werden, so können insgesamt bei nur fünf Fotodioden acht Messstrecken realisiert werden. Bei einer begrenzten Anzahl von Sendeelementen kann somit die Intensität des Niederschlags zuverlässig erfasst und beispielsweise der Scheibenwischer des Kraftfahrzeugs wirkungsvoll angesteuert werden. Bei gegebener Anzahl von Sendeelementen kann der Regensensor kompakter ausgeführt werden oder es können bei gegebener Größe des Sensors insgesamt mehr Anwendungen in den Sensor integriert werden.

Der Regensensor wird vorzugsweise an der Oberfläche der Windschutzscheibe des Kraftfahrzeugs anliegend angebracht. Der Regensensor kann z.B. mittels einer elastischen Klebeschicht unmittelbar auf der Scheibe in dem zu betrachtenden Bereich befestigt werden. Die Klebeschicht hat dann zum einen eine Befestigungsfunktion, um den Regensensor sicher auf der Scheibe zu halten, und zum anderen auch eine Ausgleichsfunktion, um Unebenheiten der Scheibe oder des Regensensors auszugleichen und den Regensensor ohne Lufteinschlüsse auf der Scheibe anzuordnen.

Über den jeweiligen Sendeelementen können jeweils auch optische Linsen vorgesehen sein, welche die Strahlen auf einen bestimmten Bereich der Scheibe fokussieren. Diese Linsen können nun so gestaltet werden, dass die Strahlen in unterschiedliche Richtungen fokussiert werden können, so dass sie auch einerseits von dem Empfangselement und andererseits von dem als Empfänger betriebenen Sendeelement empfangen werden können. Gegebenenfalls ist es auch möglich, mehrere Linsen pro Sendeelement einzusetzen.

In einer Ausführungsform ist vorgesehen, dass die Steuer- und Auswerteeinrichtung das zumindest eine Sendeelement abwechselnd als Sender und als Strahlungsempfänger betreibt. Dieses Sendeelement wird somit sowohl als Sender als auch als Empfänger genutzt, so dass die Anzahl der Sendeelemente reduziert werden kann.

Die Steuer- und Auswerteeinrichtung kann auch dazu ausgelegt sein, abwechselnd das Empfangselement einerseits und das zumindest eine Sendeelement andererseits als Strahlungsempfänger zu betreiben. Folglich werden das Empfangselement einerseits und das zumindest eine Sendeelement andererseits zeitversetzt zueinander als Strahlungsempfänger betrieben, so dass das Empfangselement einerseits und das zumindest eine Sendeelement andererseits nicht gleichzeitig als Empfänger betrieben werden, sondern zu einem bestimmten Zeitpunkt nur eines der beiden Elemente als Empfänger aktiv ist. Durch eine solche Umschaltung zwischen dem Empfangselement einerseits und dem Sendeelement als Empfänger andererseits können bei einer längeren Lebensdauer der beiden Elemente insgesamt eine Vielzahl von Messstrecken realisiert werden.

Das zumindest eine Empfangselement wird vorzugsweise ausschließlich als Empfänger betrieben. Dies bedeutet, dass dieses Empfangselement nicht zum Senden verwendet wird. Alternativ kann jedoch auch vorgesehen sein, dass das zumindest Empfangselement zusätzlich auch als Sender zum Aussenden der Strahlen betrieben wird.

Es hat sich als vorteilhaft herausgestellt, wenn die Steuer- und Auswerteeinrichtung in einem einzelnem Messzyklus folgende Schritte durchführt: Zumindest zwei Sendeelemente können zeitlich versetzt jeweils zum Aussenden der Strahlen angesteuert werden, während das Empfangselement als Empfänger betrieben wird. Die durch das Empfangselement empfangenen Strahlen von dem einen Sendeelement einerseits können dann mit den Strahlen von dem anderen Sendeelement andererseits verglichen werden. Die Differenz zwischen den Intensitäten dieser Strahlen ist dann ein Maß für die Intensität des Niederschlags. In einem weiteren Schritt innerhalb desselben Messzyklus können zumindest zwei von dem als Strahlungsempfänger ausgebildeten Sendeelement verschiedene Sendeelemente zeitlich versetzt jeweils zum Aussenden der Strahlen angesteuert werden, während das zumindest eine Sendeelement als Strahlungsempfänger betrieben wird. Die durch diesen Strahlungsempfänger empfangenen Strahlen von dem einen Sendeelement können dann mit den Strahlen von dem anderen Sendeelement verglichen werden. Auch anhand dieses Vergleiches der beiden Messstrecken kann auf die Intensität des Niederschlags zurückgeschlossen werden, wobei beispielsweise bei einer Differenz ein Steuersignal erzeugt werden kann, aufgrund dessen die Scheibenwischer betätigt werden.

Der oben beschriebene Messzyklus kann dann periodisch wiederholt werden. Ein derartiger Messzyklus ermöglicht die Auswertung von zumindest vier verschiedenen Messstrecken bei einer reduzierten Anzahl von Sendeelementen.

Bevorzugt weist der Regensensor vier Sendeelemente auf, von denen zumindest zwei auch als Strahlungsempfänger ausgebildet sind und als Strahlungsempfänger, insbesondere abwechselnd zueinander und abwechselnd mit dem Empfangselement, betrieben werden. Werden mindestens vier oder genau vier Sendeelemente eingesetzt, von denen zumindest zwei zusätzlich als Empfänger genutzt werden, so können mit lediglich fünf Elementen (z.B. LEDs) insgesamt acht Messstrecken realisiert werden, so dass einerseits eine besonders zuverlässige Erfassung der Regenintensität ermöglicht wird und andererseits der Sensor auch besonders kompakt aufgebaut werden kann. Es steht somit insgesamt auch mehr Bauraum für weitere Sensoranwendungen zur Verfügung.

Es kann vorgesehen sein, dass der Regensensor genau ausschließlich vier Sendeelemente zur Erfassung des Niederschlags aufweist, welche quadratförmig um das Empfangselement verteilt angeordnet sind.

Alternativ kann jedoch auch vorgesehen sein, dass der Regensensor mindestens vier solche Sendeelemente zur Erfassung des Niederschlags aufweist, so dass gegebenenfalls auch mehrere Sendeelemente eingesetzt werden können, wenn zusätzliche Messstrecken benötigt werden.

Bevorzugt sind die Sendeelemente äquidistant zueinander und/oder äquidistant zum Empfangselement um das Empfangselement herum verteilt angeordnet. Somit ist der Vergleich der Strahlen, welche von unterschiedlichen Sendeelementen bzw. aus unterschiedlichen Messstrecken stammen, besonders aussagekräftig im Hinblick auf die Bestimmung der Regenintensität.

Sind mindestens vier oder genau vier Sendeelemente vorgesehen, so kann ein einzelner Messzyklus des Regensensors folgendermaßen aussehen: Ein erstes und ein zweites Sendeelement können zum gleichzeitigen Aussenden der Strahlen angesteuert werden. Zeitlich versetzt dazu können ein drittes und ein viertes Sendeelement ebenfalls zum gleichzeitigen Aussenden der Strahlen angesteuert werden. Die durch das Empfangselement empfangenen Strahlen von dem ersten und zweiten Sendeelement einerseits können mit den Strahlen vom dritten und vierten Sendeelement andererseits verglichen werden. Abhängig vom Ergebnis dieses Vergleiches kann dann die Intensität des Niederschlags bestimmt werden. In einem weiteren Schritt können das erste und das vierte Sendeelement zum gleichzeitigen Aussenden der Strahlen angesteuert werden und hierbei das zweite Sendeelement als Strahlungsempfänger betrieben werden. Zeitlich versetzt dazu können dann das erste und das vierte Sendeelement noch einmal zum gleichzeitigen Aussenden der Strahlen angesteuert werden, während nun das dritte Sendeelement als Strahlungsempfänger betrieben wird. Die durch das zweite Sendeelement als Strahlungsempfänger empfangenen Strahlen einerseits können dann mit den durch das dritte Sendeelement als Strahlungsempfänger empfangenen Strahlen andererseits verglichen werden. Abhängig vom Ergebnis dieses Vergleiches kann dann die Intensität bestimmt werden. Bei einer solchen Gestaltung des einzelnen Messzyklus werden insgesamt acht verschiedene Messstrecken mit lediglich vier Sendeelementen und einem Empfangselement realisiert. Diese Messzyklen können periodisch wiederholt werden.

Ergänzend oder alternativ kann ein einzelner Messzyklus des Regensensors folgendermaßen aussehen: Das erste und das zweite Sendeelement können zum gleichzeitigen Aussenden der Strahlen angesteuert werden. Zeitlich versetzt dazu können dann das dritte und das vierte Sendeelement zum gleichzeitigen Aussenden der Strahlen angesteuert werden. Die durch das Empfangselement empfangenen Strahlen von dem ersten und zweiten Sendeelement einerseits können mit den Strahlen vom dritten und vierten Sendeelement andererseits vergleichen werden. Im weiteren Schritt kann das erste Sendeelement zum Aussenden der Strahlen angesteuert werden, während das zweite Sendeelement als Strahlungsempfänger betrieben wird. Zeitlich versetzt dazu kann dann das vierte Sendeelement zum Aussenden der Strahlen angesteuert werden, während das zweite Sendeelement noch einmal als Strahlungsempfänger betrieben wird. Die durch das zweite Sendeelement als Strahlungsempfänger empfangenen Strahlen von dem ersten Sendeelement einerseits können mit den Strahlen von dem vierten Sendeelement andererseits verglichen werden.

Innerhalb dieses Messzyklus kann zusätzlich auch in einem weiteren Schritt das erste Sendeelement noch einmal zum Aussenden der Strahlen angesteuert werden, während nun das dritte Sendeelement als Strahlungsempfänger betrieben wird. Zeitlich versetzt dazu kann dann das vierte Sendeelement noch einmal zum Aussenden der Strahlen angesteuert werden, während das dritte Sendeelement als Strahlungsempfänger betrieben wird. Die durch das dritte Sendeelement als Strahlungsempfänger empfangenen Strahlen vom ersten Sendeelement einerseits können mit den Strahlen vom vierten Sendeelement andererseits verglichen werden. Anhand der Vergleiche kann dann die Intensität des Niederschlags bestimmt werden. Ein solcher Messzyklus erweist sich insbesondere dann als vorteilhaft, wenn die Alterung des Empfangselements einen relativ großen Einfluss auf die Gesamtleistung des Sensors hat. Bei diesem Messzyklus wird das Empfangselement nämlich insgesamt weniger beansprucht.

Die beiden oben beschriebenen Messzyklen können gegebenenfalls auch miteinander kombiniert werden. Dies kann z.B. so aussehen, dass für ein vorbestimmtes Zeitintervall der erste Messzyklus periodisch wiederholt wird und für ein zweites vorgegebenes Zeitintervall der zweite Messzyklus periodisch wiederholt wird. Die Auswahl des aktuellen Messzyklus kann gegebenenfalls auch von der detektierten Intensität des Niederschlags und/oder in Abhängigkeit von anderen Betriebsparametern erfolgen.

Bevorzugt sind die Sendeelemente und/oder das Empfangselement als Lumineszenzdioden (LEDs) ausgebildet. Sie können elektromagnetische Strahlung im sichtbaren oder unsichtbaren Spektralbereich aussenden. Beispielsweise werden Strahlen ausgesendet, deren Frequenz im ultravioletten Spektralbereich liegt.

Die Erfindung betrifft außerdem ein Kraftfahrzeug mit einem erfindungsgemäßen Regensensor.

Des Weiteren betrifft die Erfindung auch ein entsprechendes Verfahren.

Die mit Bezug auf den erfindungsgemäßen Regensensor vorgestellten bevorzugten Ausführungsformen und deren Vorteile gelten entsprechend für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand einzelner bevorzugter Ausführungsbeispiele, wie auch unter Bezugnahme auf die beigefügten Zeichnungen näher erläutert.

Es zeigen:
- Fig. 1: in schematischer Darstellung ein Kraftfahrzeug gemäß einer Ausführungsform der Erfindung; und
- Fig. 2 bis 10: in schematischer Darstellung die Anordnung von Sendeelementen und eines Empfangselements eines Regensensors gemäß einer Ausführungsform der Erfindung, wobei Messzyklen des Regensensors näher erläutert werden.

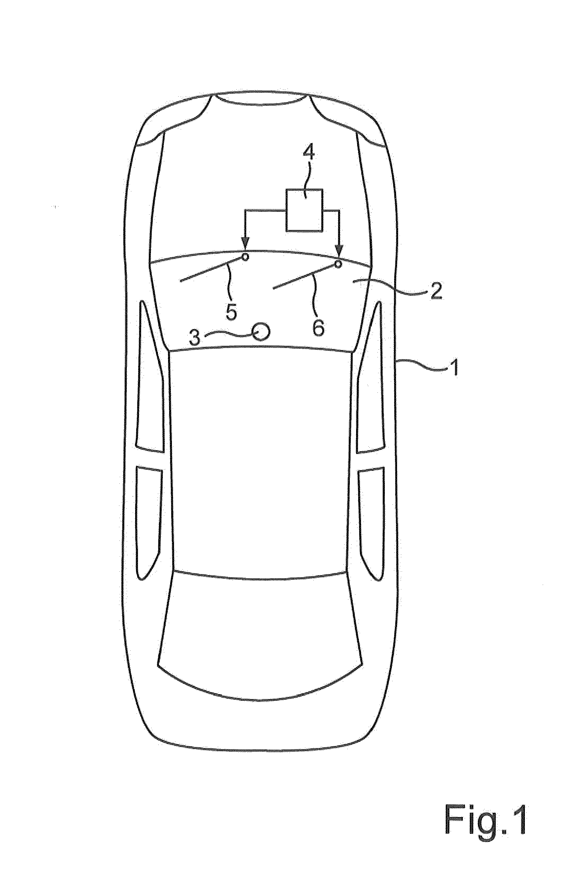

Ein in Fig. 1 dargestelltes Kraftfahrzeug 1 ist beispielsweise ein Personenkraftwagen. An einer dem Innenraum des Kraftfahrzeugs 1 zugewandten Oberfläche einer Windschutzscheibe 2 ist ein Regensensor 3 angebracht, welcher zur Erfassung der Intensität eines Niederschlags auf der Windschutzscheibe 2 ausgebildet ist. Der Regensensor 3 ist mit einem Steuergerät 4 elektrisch gekoppelt, mittels welchem Scheibenwischer 5, 6 zum Wischen der Windschutzscheibe 2 angesteuert werden. Das Steuergerät 4 steuert die Frequenz und/oder die Geschwindigkeit der Bewegung der Scheibenwischer 5, 6 in Abhängigkeit von der erfassten Intensität des Niederschlags. Allgemein gesagt beinhaltet der Regensensor 3 mehrere Sendeelemente sowie ein Empfangselement. Die Sendeelemente und das Empfangselement können identische Elemente sein, nämlich vorzugsweise Fotodioden bzw. Leuchtdioden, welche elektromagnetische Strahlung im ultravioletten Spektralbereich aussenden können. Es kann aber eine andere Frequenz der Strahlung gewählt werden.

Der Sensor 3 ist beispielsweise über eine Klebeschicht an der Windschutzscheibe 2 angebracht. Der Sensor 3 kann auch hinter einem Gehäuse eines Rückspiegels versteckt angeordnet sein, d.h. zwischen der Scheibe 2 und dem Gehäuse.

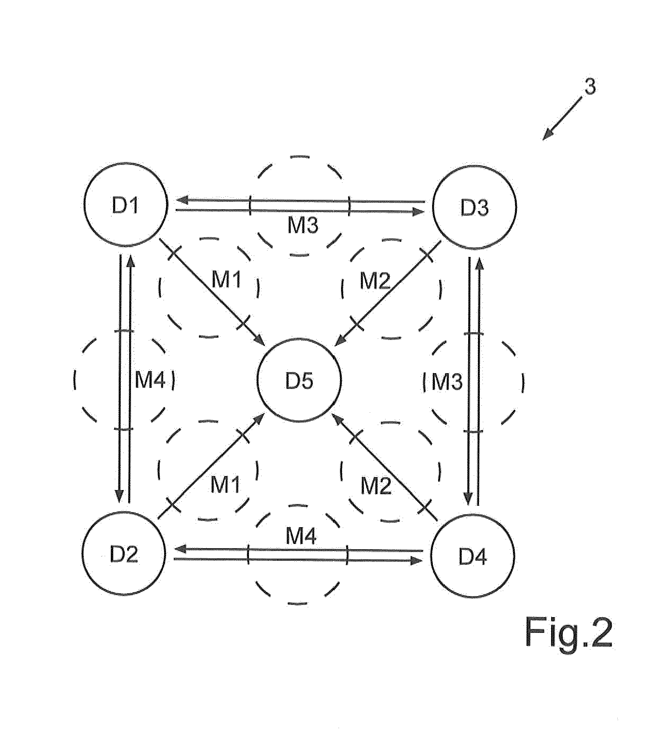

In Fig. 2 ist die Anordnung von Sendeelemente D1, D2, D3, D4 sowie eines Empfangselements D5 des Regensensors 3 näher dargestellt. Der Regensensor 3 beinhaltet im Ausführungsbeispiel genau vier Sendeelemente D1 bis D4 sowie ein einziges Empfangselement D5, welches ausschließlich als Empfänger betrieben wird. Neben dem Empfangselement D5 werden zusätzlich auch die Sendeelemente D2, D3 als Strahlungsempfänger verwendet bzw. betrieben, so dass die beiden Sendeelemente D2, D3 sowohl als Sender als auch als Empfänger in invertiertem Betrieb genutzt werden.

Über den Sendeelementen D1 bis D4 befindet sich jeweils eine Linse bzw. eine andere Optik, welche so ausgelegt ist, dass die Fokussierung jeweils in mehrere Richtungen erfolgt. Im Ausführungsbeispiel gemäß Fig. 2 erfolgt die Fokussierung jeweils in drei Richtungen. Vom Sendeelement D1 ausgesendete Strahlen werden sowohl in Richtung über die Windschutzscheibe 2 zum Empfangselement D5 als auch zu den Sendeelementen D2, D3 fokussiert. Entsprechendes gilt auch für die weiteren Sendeelemente D2 bis D4.

In Fig. 2 sind mit M1 bis M4 Messfelder dargestellt, welche Bereiche der Windschutzscheibe 2 darstellen, an denen die ausgesendeten Strahlen reflektiert werden sollen. Jedes Messfeld M1 bis M4 bedeutet also eine separate Messstrecke, welche aufgrund der Nutzung zumindest einiger der Sendeelemente D1 bis D4 als Strahlungsempfänger gegeben sind. Wird beispielsweise durch das Sendeelement D1 gesendet, so ist eine erste Messstrecke vom Element D1 bis hin zum Empfangselement D5 gegeben, eine zweite Messstrecke ist vom D1 zum D3 gegeben, und eine dritte Messstrecke ist vom D1 zum D2 gegeben, Es können sich somit insgesamt acht Messstrecken ergeben, und zwar mit lediglich vier Sendeelementen D1 bis D4 und einem einzigen Empfangselement D5.

Die Sendeelementen D1 bis D4 sind quadratförmig um das Empfangselement D5 herum verteilt angeordnet. Sie sind äquidistant zueinander und außerdem auch äquidistant zum Empfangselement D5 angeordnet, so dass einerseits die Abstände zwischen den benachbarten Sendeelementen D1 bis D4 gleich sind und andererseits auch die jeweiligen Abstände zwischen den Sendeelementen D1 bis D4 einerseits und dem Empfangselement D5 andererseits gleich sind. Die Sendeelemente D1 bis D4 liegen also an jeweiligen Ecken eines Quadrats, in dessen Mitte sich das Empfangselement D5 befindet. Die Sendeelemente D1 und D4 liegen dabei auf einer gemeinsamen Diagonalen, und auch die Sendeelemente D2 und D3 liegen auf einer gemeinsamen Diagonalen.

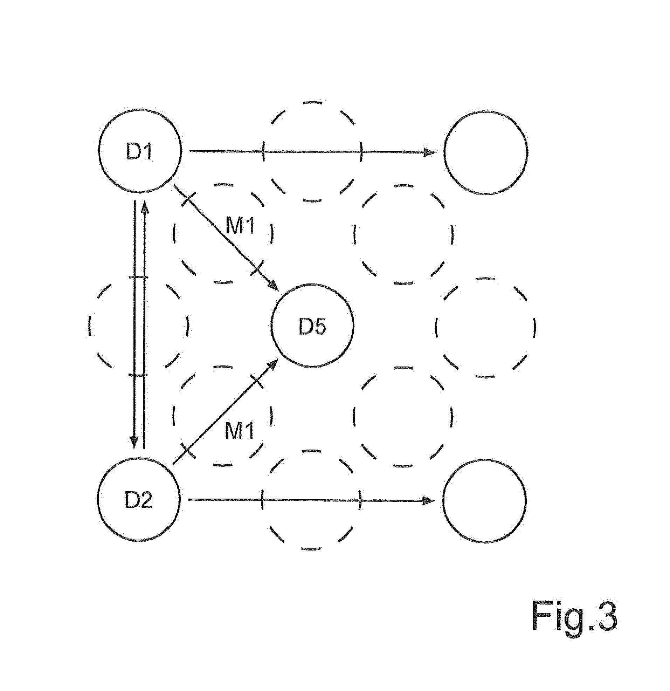

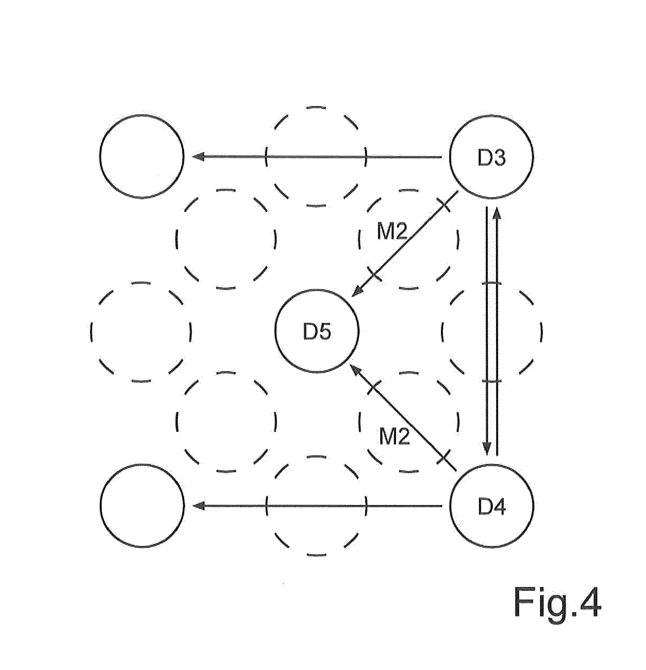

Ein einzelner Messzyklus des Regensensors 3 wird nachfolgend näher erläutert:
Gemäß Fig. 3 werden zunächst das erste und das zweite Sendeelement D1, D2 jeweils zum gleichzeitigen Aussenden der Strahlen angesteuert, nämlich mithilfe einer Steuer- und Auswerteeinrichtung (nicht dargestellt). Die beiden Sendeelemente D1, D2 senden also gleichzeitig elektromagnetische Strahlen aus. Als Empfänger wird dabei das Empfangselement D5 betrieben. Das Empfangselement D5 empfängt also einen Teil der Strahlen und erzeugt ein elektronisches Signal, welches die Intensität dieser Strahlen charakterisiert. In einem nachfolgenden Schritt werden gemäß Fig. 4 das dritte Sendeelement D3 und das vierte Sendeelement D4 zum gleichzeitigen Aussenden der Strahlen angesteuert, während das Empfangselement D5 weiterhin als Empfänger betrieben wird. Auch zu diesen empfangenen Strahlen erzeugt das Empfangselement D5 ein elektrisches Signal, welches die Intensität der empfangenen Strahlen charakterisiert. Die Intensität der Strahlen von den Elementen D1, D2 wird dann mit der Intensität der Strahlen von D3, D4 verglichen und abhängig von diesem Vergleich werden die Scheibenwischer 5, 6 angesteuert.

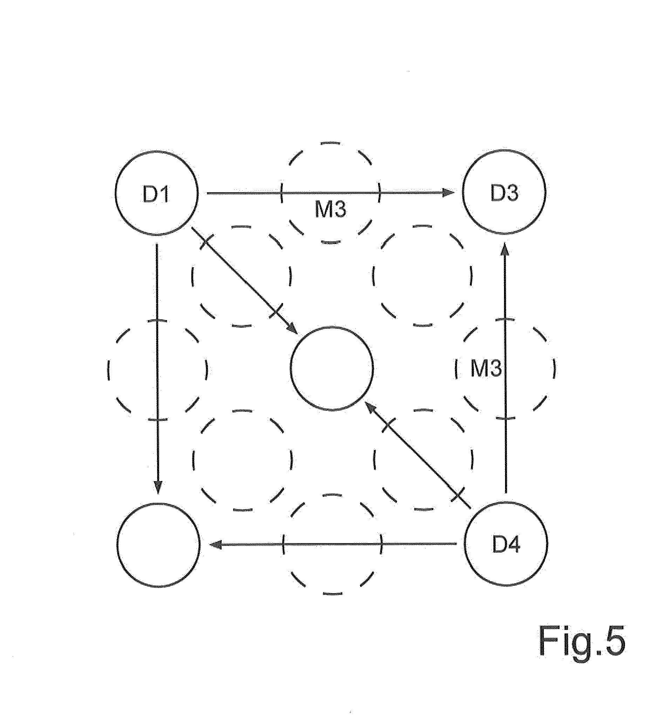

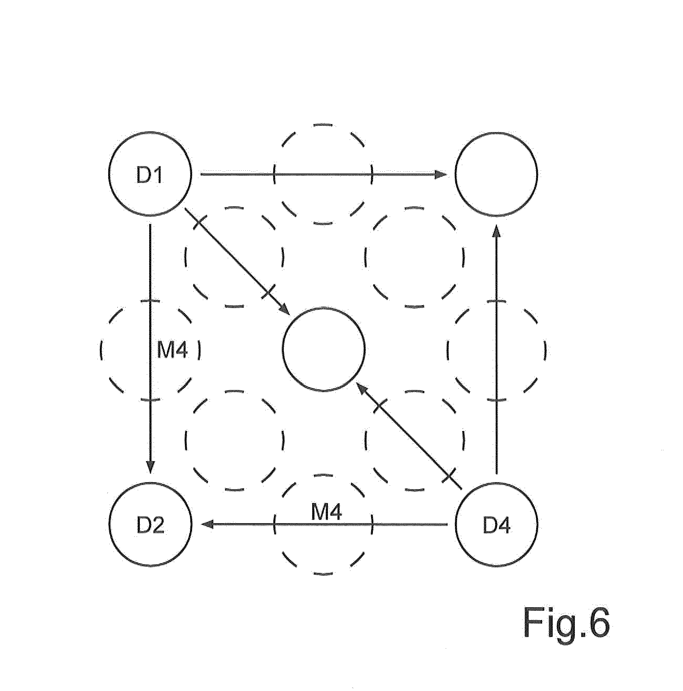

In einem nachfolgenden Schritt innerhalb desselben Messzyklus werden das erste und das vierte Sendeelement D1, D4 gemäß Fig. 5 zum gleichzeitigen Aussenden der Strahlen angesteuert. Hierbei wird das dritte Sendeelement D3 als Strahlungsempfänger betrieben. Das Element D3 empfängt also gleichzeitig die Strahlen von D1 und die Strahlen von D4. Gemäß Fig. 6 erfolgt dann in einem nachfolgenden Schritt eine nochmalige Ansteuerung der Sendeelemente D1 und D4, welche noch einmal die Strahlen gleichzeitig aussenden. Hierbei wird jedoch das Sendeelement D2 als Strahlungsempfänger betrieben. Die beiden in den Fig. 5 und 6 bezeichneten Messstrecken M3 und M4 werden dann miteinander verglichen. Dies bedeutet, dass die vom Sendeelement D3 empfangenen Strahlen mit den Strahlen verglichen werden, welche durch das Sendeelement D2 empfangen wurden. Abhängig von diesem Vergleich werden die Scheibenwischer 5, 6 angesteuert.

Der oben beschriebene Messzyklus wird periodisch wiederholt, nämlich insbesondere in der Weise, dass die Intensität des Niederschlags fortlaufend bzw. kontinuierlich erfasst wird.

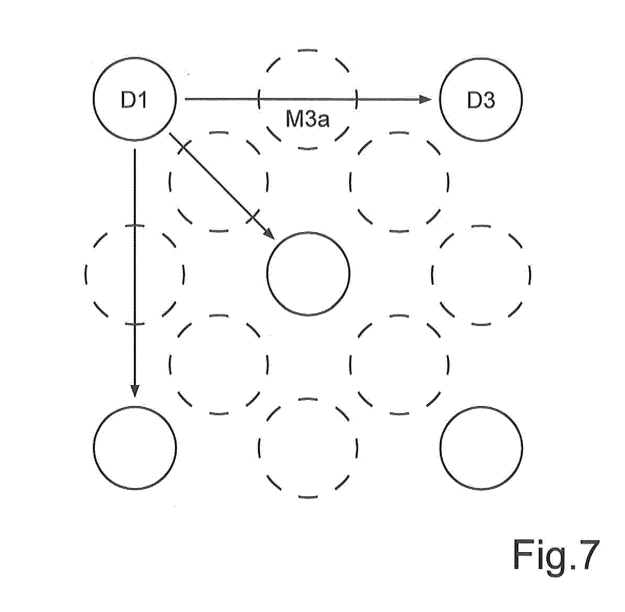

Alternativ oder ergänzend zu den Schritten gemäß den Fig. 5 und 6 können auch Schritte innerhalb eines Messzyklus durchgeführt werden, welche mit Bezug auf die Fig. 7 bis 10 näher erläutert werden. Diese Schritte erweisen sich insbesondere dann als besonders vorteilhaft, wenn die Alterung des Empfangselements D5 einen großen Einfluss auf die Gesamtleistung des Regensensors 3 hat.

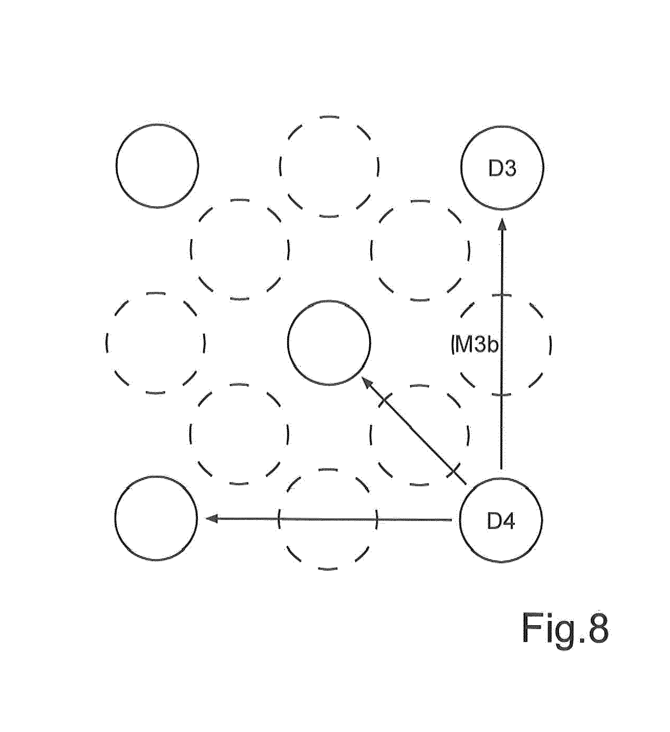

Gemäß Fig. 7 wird das erste Sendeelement D1 zum Aussenden der Strahlen angesteuert, während das dritte Element D3 als Empfänger betrieben wird. Es wird somit ausschließlich eine Messstrecke M3a genutzt. Zeitlich versetzt dazu erfolgt in einem nachfolgenden Schritt gemäß Fig. 8 eine Ansteuerung des Sendeelements D4, welches die Strahlen aussendet. Auch hier wird das dritte Sendeelement D3 als Empfänger betrieben. Es wird also die Messstrecke M3b genutzt. Die beiden in den Fig. 7 und 8 dargestellten Messstrecken M3a und M3b können miteinander verglichen werden, indem die Intensität der Strahlen von D1 mit der Intensität der Strahlen von D4 miteinander verglichen werden. Abhängig von diesem Vergleich erfolgt dann die Ansteuerung der Scheibenwischer 5, 6.

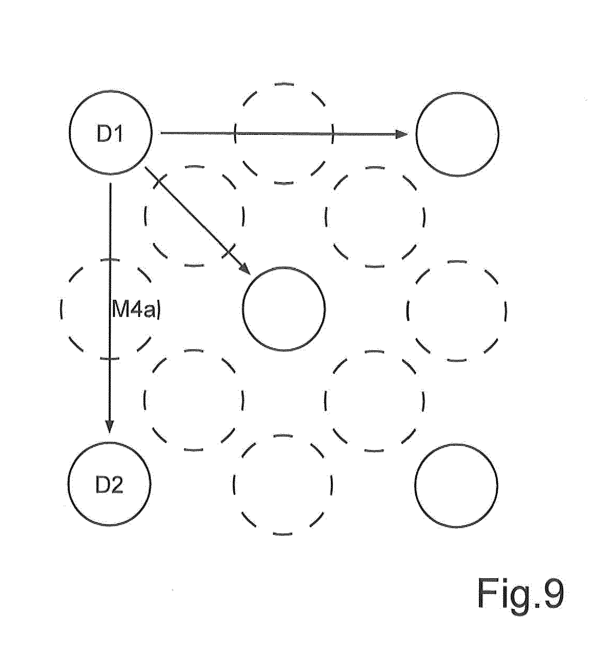

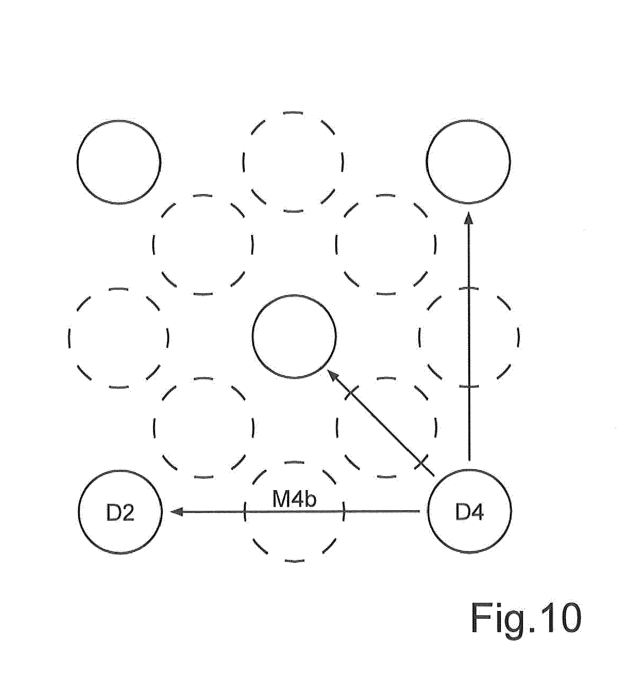

In einem weiteren Schritt kann gemäß Fig. 9 noch einmal das erste Sendeelement D1 zum Aussenden der Strahlen angesteuert werden, während nun das zweite Element D2 als Empfänger betrieben wird. Es wird eine Messstrecke M4a zwischen D1 und D2 genutzt. Zeitlich versetzt dazu erfolgt dann in einem weiteren Schritt gemäß Fig. 10 die Ansteuerung des vierten Sendeelements D4, wobei als Empfänger weiterhin das zweite Element D2 betrieben wird. Es wird eine Messstrecke M4b zwischen D4 und D2 genutzt. Die Messstrecken M4a gemäß Fig. 9 und M4b gemäß Fig. 10 werden verglichen, indem die durch das zweite Element D2 empfangenen Strahlen von D1 einerseits und von D4 andererseits miteinander verglichen werden.

Die Schritte gemäß den Fig. 7 bis 10 können also zusätzlich oder alternativ zu den Schritten gemäß den Fig. 5 und 6 innerhalb eines Messzyklus durchgeführt werden. Bei jedem Messzyklus werden die beiden ersten Schritte gemäß den Fig. 3 und 4 durchgeführt.

## Patentansprüche

1. Regensensor (3) zum Erfassen der Intensität eines Niederschlags auf einer lichtdurchlässigen Scheibe (2) eines Kraftfahrzeugs (1), mit zumindest zwei Sendeelementen (D1 bis D4) jeweils zum Aussenden elektromagnetischer Strahlen, mit zumindest einem Empfangselement (D5) zum Empfangen zumindest eines Teils der ausgesendeten Strahlen, und mit einer Steuer- und Auswerteeinrichtung zum Ansteuern der Sendeelemente (D1 bis D4) und zum Bestimmen der Intensität abhängig von den empfangenen Strahlen,
**dadurch gekennzeichnet, dass**
zumindest eines der zumindest zwei Sendeelemente (D1 bis D4) auch als Strahlungsempfänger ausgebildet ist und die Steuer- und Auswerteeinrichtung dazu ausgelegt ist, beim Aussenden der Strahlen durch ein weiteres Sendeelement (D1 bis D4) das zumindest eine Sendeelement (D1 bis D4) als Strahlungsempfänger zu betreiben.

2. Regensensor (3) nach Anspruch 1,
**dadurch gekennzeichnet, dass**
die Steuer- und Auswerteeinrichtung dazu ausgelegt ist, das zumindest eine Sendeelement (D1 bis D4) abwechselnd als Sender und als Strahlungsempfänger zu betreiben.

3. Regensensor (3) nach Anspruch 1 oder 2,
**dadurch gekennzeichnet, dass**
die Steuer- und Auswerteeinrichtung dazu ausgelegt ist, abwechselnd das Empfangselement (D5) einerseits und das zumindest eine Sendeelement (D1 bis D4) andererseits als Strahlungsempfänger zu betreiben.

4. Regensensor (3) nach einem der vorhergehenden Ansprüche,
**dadurch gekennzeichnet, dass**
die Steuer- und Auswerteeinrichtung dazu ausgelegt ist, in einem einzelnen Messzyklus:
- zumindest zwei Sendeelemente (D1 bis D4) zeitlich versetzt jeweils zum Aussenden der Strahlen anzusteuern und die durch das zumindest eine Empfangselement (D5) empfangenen Strahlen von dem einen Sendeelement (D1 bis D4) einerseits mit den Strahlen von dem anderen Sendeelement (D1 bis D4) andererseits zu vergleichen und zeitlich versetzt dazu:
- zumindest zwei von dem Strahlungsempfänger verschiedene Sendeelemente (D1 bis D4) zeitlich versetzt jeweils zum Aussenden der Strahlen anzusteuern und hierbei das zumindest eine Sendeelement (D1 bis D4) als Strahlungsempfänger zu betreiben und die durch diesen Strahlungsempfänger empfangenen Strahlen von dem einen Sendeelement (D1 bis D4) mit den Strahlen von dem anderen Sendeelement (D1 bis D4) zu vergleichen.

5. Regensensor (3) nach einem der vorhergehenden Ansprüche,
**dadurch gekennzeichnet, dass**
der Regensensor (3) vier Sendeelemente (D1 bis D4) aufweist, wobei zumindest zwei der vier Sendeelemente (D1 bis D4) auch als Strahlungsempfänger ausgebildet sind und die Steuer- und Auswerteeinrichtung dazu ausgelegt ist, die zumindest zwei Sendeelemente (D1 bis D4) als Strahlungsempfänger, insbesondere abwechselnd, zu betreiben.

6. Regensensor (3) nach Anspruch 5,
**dadurch gekennzeichnet, dass**
der Regensensor (3) genau vier Sendeelemente (D1 bis D4) aufweist, welche quadratförmig um das Empfangselement (D5) verteilt angeordnet sind.

7. Regensensor (3) nach einem der vorhergehenden Ansprüche,
**dadurch gekennzeichnet, dass**
die Sendeelemente (D1 bis D4) äquidistant zueinander und/oder äquidistant zum Empfangselement (D5) um das Empfangselement (D5) verteilt angeordnet sind.

8. Regensensor (3) nach einem der vorhergehenden Ansprüche,
**dadurch gekennzeichnet, dass**
die Steuer- und Auswerteeinrichtung dazu ausgelegt ist, in einem einzelnen Messzyklus:
- ein erstes und ein zweites Sendeelement (D1, D2) zum gleichzeitigen Aussenden der Strahlen anzusteuern und zeitlich versetzt hierzu ein drittes und ein viertes Sendeelement (D3, D4) zum gleichzeitigen Aussenden der Strahlen anzusteuern und die durch das zumindest eine Empfangselement (D5) empfangenen Strahlen von dem ersten und zweiten Sendeelement (D1, D2) einerseits mit den Strahlen von dem dritten und vierten Sendeelement (D3, D4) andererseits zu vergleichen und zeitlich versetzt dazu:
- das erste und das vierte Sendeelement (D1, D4) zum gleichzeitigen Aussenden der Strahlen anzusteuern und hierbei das zweite Sendeelement (D2) als Strahlungsempfänger zu betreiben und zeitlich versetzt hierzu das erste und das vierte Sendeelement (D1, D4) noch einmal zum gleichzeitigen Aussenden der Strahlen anzusteuern und hierbei das dritte Sendeelement (D3) als Strahlungsempfänger zu betreiben und die durch das zweite Sendeelement (D2) als Strahlungsempfänger empfangenen Strahlen einerseits mit den durch das dritte Sendeelement (D3) als Strahlungsempfänger empfangenen Strahlen andererseits zu vergleichen.

9. Regensensor (3) nach einem der vorhergehenden Ansprüche,
**dadurch gekennzeichnet, dass**
die Steuer- und Auswerteeinrichtung dazu ausgelegt ist, in einem einzelnen Messzyklus:
- ein erstes und ein zweites Sendeelement (D1, D2) zum gleichzeitigen Aussenden der Strahlen anzusteuern und zeitlich versetzt hierzu ein drittes und ein viertes Sendeelement (D3, D4) zum gleichzeitigen Aussenden der Strahlen anzusteuern und die durch das zumindest eine Empfangselement (D5) empfangenen Strahlen von dem ersten und zweiten Sendeelement (D1, D2) einerseits mit den Strahlen von dem dritten und vierten Sendeelement (D3, D4) andererseits zu vergleichen und zeitlich versetzt dazu:
- das erste Sendeelement (D1) zum Aussenden der Strahlen anzusteuern und hierbei das zweite Sendeelement (D2) als Strahlungsempfänger zu betreiben und zeitlich versetzt hierzu das vierte Sendeelement (D4) zum Aussenden der Strahlen anzusteuern und hierbei das zweite Sendeelement (D2) als Strahlungsempfänger zu betreiben und die durch das zweite Sendeelement (D2) als Strahlungsempfänger empfangenen Strahlen von dem ersten Sendeelement (D1) einerseits mit den Strahlen von dem vierten Sendeelement (D4) andererseits zu vergleichen.

10. Regensensor (3) nach Anspruch 9,
**dadurch gekennzeichnet, dass**
die Steuer- und Auswerteeinrichtung in dem einzelnen Messzyklus zusätzlich dazu ausgelegt ist, das erste Sendeelement (D1) zum Aussenden der Strahlen anzusteuern und hierbei das dritte Sendeelement (D3) als Strahlungsempfänger zu betreiben und zeitlich versetzt hierzu das vierte Sendeelement (D4) zum Aussenden der Strahlen anzusteuern und hierbei das dritte Sendeelement (D3) als Strahlungsempfänger zu betreiben und die durch das dritte Sendeelement (D3) als Strahlungsempfänger empfangenen Strahlen von dem ersten Sendeelement (D1) einerseits mit den Strahlen von dem vierten Sendeelement (D4) andererseits zu vergleichen.

11. Regensensor (3) nach einem der vorhergehenden Ansprüche,
**dadurch gekennzeichnet, dass**
die Sendeelemente (D1 bis D4) und/oder das Empfangselement (D5) als Lumineszenzdioden ausgebildet sind.

12. Kraftfahrzeug (1) mit einem Regensensor (3) nach einem der vorhergehenden Ansprüche.

13. Verfahren zum Erfassen der Intensität eines Niederschlags auf einer lichtdurchlässigen Scheibe (2) eines Kraftfahrzeugs (1) mittels eines Regensensors (3), bei welchem zumindest zwei Sendeelemente (D1 bis D4) elektromagnetische Strahlen aussenden, zumindest ein Empfangselement (D5) zumindest einen Teils der ausgesendeten Strahlen empfängt und mittels einer Steuer- und Auswerteeinrichtung die Sendeelemente (D1 bis D4) angesteuert werden und die Intensität abhängig von den empfangenen Strahlen bestimmt wird,
**dadurch gekennzeichnet, dass**
zumindest eines der zumindest zwei Sendeelemente (D1 bis D4) auch als Strahlungsempfänger betrieben wird.
